# EUROPEAN PATENT APPLICATION

(11) **EP 4 742 415 A1**
(43) Date of publication of application: **13.05.2026**
(21) Application number: 25213921.7
(22) Date of filing: 06.11.2025
(51) Int. Cl.: H01M 50/44, H01M 50/429, H01M 50/414, H01M 50/124, H01M 50/121, H01M 50/107

(54) **RECHARGEABLE BATTERY AND BATTERY PACK INCLUDING THE RECHARGEABLE BATTERY**

(30) Priority: 07.11.2024 KR 20240157282
(71) Applicant: Samsung SDI Co., Ltd., Yongin-si, Gyeonggi-do (KR)
(72) Inventor: Son, Il Oh, 16678 Suwon-si, Gyeonggi-do (KR)
(74) Representative: Gulde & Partner

(57) **Abstract**

A rechargeable battery includes a case having a sidewall portion including a base layer. An electrode assembly is accommodated in the case. The sidewall portion includes a nanofiber web made of cellulose-based nanofibers and a polyolefin-based resin that are provided on one or both of an outer peripheral surface of the base layer and an inner peripheral surface of the base layer.

## Description

### Field of the Disclosure

The present disclosure relates to a rechargeable battery and a battery pack including the rechargeable battery.

### Discussion of Related Art

With the rapid spread of electronic devices, such as mobile phones, laptop computers, and electric vehicles, the demand for rechargeable batteries with high energy density and high capacity has rapidly increased. Accordingly, research and development for improving performance of rechargeable lithium batteries are actively underway.

A rechargeable lithium battery includes a positive electrode and a negative electrode including active materials that allow for intercalation and deintercalation of lithium ions and an electrolyte. The rechargeable lithium battery produces electrical energy through an oxidation-reduction reaction taking place when the lithium ions are intercalated and deintercalated to and from the positive electrode and the negative electrode.

The information disclosed in section serves as the background of the present disclosure and may include information that does not constitute prior or related art.

### SUMMARY OF THE DISCLOSURE

The invention is defined by the appended claims. The description that follows is subjected to this limitation. Any disclosure lying outside the scope of said claims is only intended for illustrative as well as comparative purposes.

The present disclosure is directed to providing a rechargeable battery and a battery pack including the rechargeable battery. The rechargeable battery has high stability in the event of an external collision and is capable of suppressing ignition inside the battery.

The rechargeable battery also has excellent moisture and oxygen blocking effects and is capable of suppressing expansion of the battery.

The rechargeable battery also has excellent electrolyte impregnability.

A rechargeable battery according to the present disclosure includes a case having a sidewall portion including a base layer; and an electrode assembly accommodated in the case, wherein the sidewall portion includes a nanofiber web including cellulose-based nanofibers and a polyolefin-based resin that are provided (directly) on one or both of an outer peripheral surface of the base layer and an inner peripheral surface of the base layer.

A battery pack according to the present disclosure includes a housing; and a plurality of rechargeable batteries disposed inside the housing, wherein the rechargeable batteries each include a case having a sidewall portion including a base layer; and an electrode assembly accommodated in the case, wherein the sidewall portion includes a nanofiber web including of cellulose-based nanofibers and a polyolefin-based resin that are provided (directly) on one or both of an outer peripheral surface of the base layer and an inner peripheral surface of the base layer.

According to the present disclosure, because a rechargeable battery includes a case including cellulose-based nanofibers and a polyolefin-based resin, stability of the battery in the event of an external collision is high, ignition inside the battery can be suppressed, a moisture and oxygen blocking effect is excellent, expansion of the battery can be suppressed, and electrolyte impregnability is excellent.

### BRIEF DESCRIPTION OF THE DRAWINGS

The drawings illustrate preferred embodiments of the present disclosure by example. The disclosure is not limited to the embodiments set forth in the drawings.
FIG. 1 is a perspective view of a battery pack according to various embodiments of the present disclosure.
FIG. 2 is a perspective view of a rechargeable battery according to an embodiment of the present disclosure.
FIG. 3 is a cross-sectional view of a rechargeable battery according to an embodiment of the present disclosure.
FIG. 4 is a cross-sectional view in a thickness direction of a sidewall portion of a case of a rechargeable battery according to an embodiment of the present disclosure.
FIG. 5 is a top view of an inner top configuration of the case of a rechargeable battery according to an embodiment of the present disclosure.
FIG. 6 is a cross-sectional view of a configuration in a width direction of the case of a rechargeable battery according to an embodiment of the present disclosure.
FIG. 7 is a cross-sectional view of a cross-sectional configuration in a thickness direction of a sidewall portion of the case of a rechargeable battery according to another embodiment of the present disclosure.
FIG. 8 is a cross-sectional view of a cross-sectional configuration in a thickness direction of a sidewall portion of the case of a rechargeable battery according to yet another embodiment of the present disclosure.
FIG. 9 is a cross-sectional view of a cross-sectional configuration in a thickness direction of a sidewall portion of the case of a rechargeable battery according to still another embodiment of the present disclosure.

### DETAILED DESCRIPTION

Hereinafter, exemplary embodiments of the present disclosure will be described in detail with reference to the accompanying drawings. Terms or words used in the present specification and claims should not be construed as being limited to general or dictionary meanings and should be interpreted with meanings and concepts consistent with the technical spirit of the present disclosure on the basis of the principle that the inventor can appropriately define the concept of a term to best describe his or her invention. Therefore, the embodiments described herein and configurations shown in the drawings are merely some of the most preferable embodiments of the present disclosure and do not represent all the technical spirit of the present disclosure. Accordingly, it should be understood that various equivalents and modifications that can replace the embodiments may be present at the time of filing the present application. Also, the expressions "comprise," "include," "comprising," and/or "including" used in this specification specify the presence of mentioned shapes, numbers, steps, operations, members, elements, and/or groups thereof and do not exclude the presence or addition of one or more other shapes, numbers, steps, operations, members, elements, and/or groups thereof. In addition, when describing embodiments of the present disclosure, the expressions "can" and "may" may include "one or more embodiments of the present disclosure."

In addition, in order to help understanding of the disclosure, the accompanying drawings are not drawn to scale, and the dimensions of some components may be exaggerated. Also, the same reference numerals may be assigned to the same components in different embodiments.

When two compared objects are mentioned as being "the same," it means that they are "substantially the same." Being substantially the same may include a case of having a variation that is considered low in the art, for example, a variation within 5%. Also, when a certain parameter is described as being uniform in a predetermined region, this may mean that the parameter is uniform from an average perspective.

Although terms such as "first" and "second" are used to describe various components, of course, the components are not limited by the terms. The terms are only used to distinguish one component from another component, and of course, a first component may also be a second component unless particularly stated otherwise.

Throughout the specification, each component may be singular or plural unless particularly stated otherwise.

When an arbitrary configuration is described as being disposed "above (or below)" a component or "on (or under)" a component, this may mean not only that the arbitrary configuration is disposed in contact with an upper surface (or lower surface) of the component but also that another configuration may be interposed between the component and the arbitrary configuration disposed on (or under) the component.

Also, when a certain component is described as being "connected," "coupled," or "linked" to another component, it should be understood that, although the components may be directly connected or linked to each other, another component may be "interposed" between the two components, or the two components may be "connected." "coupled," or "linked" to each other through another component. In addition, when a certain part is described as being electrically coupled to another part, this not only includes a case in which the two parts are directly connected, but also includes a case in which the two parts are connected with another device disposed therebetween.

Throughout the specification, "A and/or B" means A, B, or A and B unless particularly stated otherwise. That is, the term "and/or" includes any and all combinations of a plurality of listed items. "C to D" means larger than or equal to C and smaller than or equal to D unless particularly stated otherwise.

When phrases such as "at least one of A, B, and C," "at least one selected from the group consisting of A, B, and C," and "at least one selected from A, B, and C" are used in designating a list of elements A, B, and C, the phrases may indicate any and all suitable combinations.

The term "use" may be considered a synonym of the term "utilize." As used in this specification, the terms "substantially," "approximately," and similar terms are used as approximate terms but are not used as degree terms, and they are for taking into account inherent deviations of measured or calculated values evident to those skilled in the art.

Spatially relative terms, such as "beneath," "below," "lower," "above," "upper" and the like, may be used herein for ease of description to describe one element or feature's relationship to another element(s) or feature(s) as illustrated in the figures. The spatially relative positions are intended to encompass different orientations of the device in use or operation in addition to the orientation depicted in the figures. For example, if the device in the figures is turned over, elements described as "below" or "beneath" other elements would then be oriented "above" the other elements. Thus, the term "below" can encompass an orientation of both above and below.

The terms used in the present specification are for describing the embodiments of the present disclosure and are not intended to limit the present disclosure.

Hereinafter, a rechargeable battery and a battery pack including the rechargeable battery according to various embodiments of the present disclosure will be described with reference to the accompanying drawings. Thicknesses of lines or sizes of components illustrated in the drawings may be exaggerated for clarity and convenience of description. Also, terms used below are terms defined in consideration of functions in the present disclosure and may be changed according to an intention or customary practice of a user or an operator. Therefore, the terms should be defined based on the content throughout the present specification.

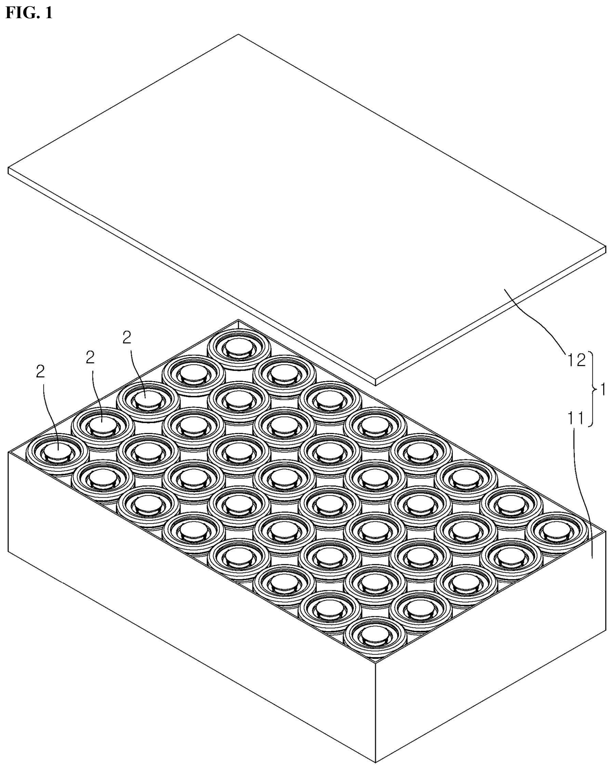

FIG. 1 is a perspective view of a battery pack according to various embodiments of the present disclosure.

Referring to FIG. 1, a battery pack according to various embodiments includes a housing 1 and rechargeable batteries 2. The housing 1 forms an exterior of the battery pack and includes a space in which the rechargeable batteries 2 are accommodated.

The housing 1 according to the present embodiment may include a housing body 11 and a cover 12.

The housing body 11 may be formed as a box that is hollow and has an open side. A cross-sectional shape of the housing body 11 is not limited to the quadrangular shape illustrated in FIG. 1 and may be changed to various shapes such as a polygonal shape, a circular shape, and an elliptical shape.

The cover 12 may be coupled to the housing body 11 and may close the space inside the housing body 11. The cover 12 may be formed to be substantially plate-like and may face the open side of the housing body 11. The cover 12 may be fixed to the housing body 11 using various types of coupling methods such as bolting, welding, and fitting.

Each of the rechargeable batteries 2 may serve as a unit structure that stores and supplies power in the battery pack.

A plurality of rechargeable batteries 2 may be provided. The rechargeable batteries 2 may be disposed in various patterns, such as a lattice pattern and a zigzag pattern, inside the housing 1. The rechargeable batteries 2 may be disposed parallel to each other. The number of rechargeable batteries 2 may vary according to the size, shape, etc., of the housing 1. A detailed configuration of the rechargeable batteries will be described below.

The plurality of rechargeable batteries 2 may be electrically connected by a busbar (not illustrated). The rechargeable batteries 2 may be connected in series or parallel by a busbar. For example, a busbar may connect rechargeable batteries 2 disposed in the same row inside the housing 1 in parallel to each other and may connect rechargeable batteries 2 disposed in two adjacent rows in series to each other. The busbar may be formed of an electrically conductible material such as copper, aluminum, or nickel.

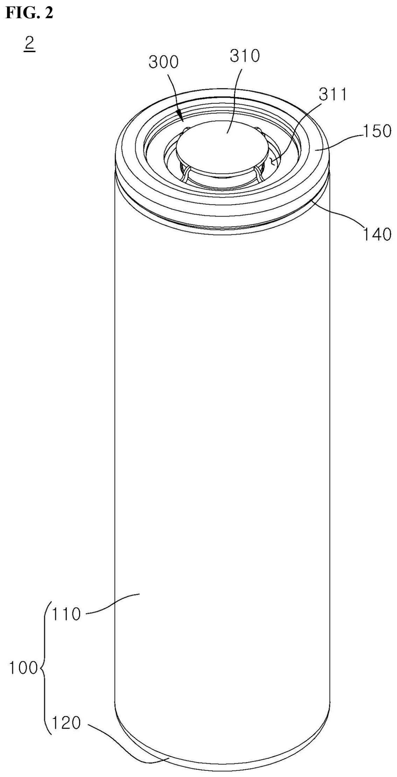

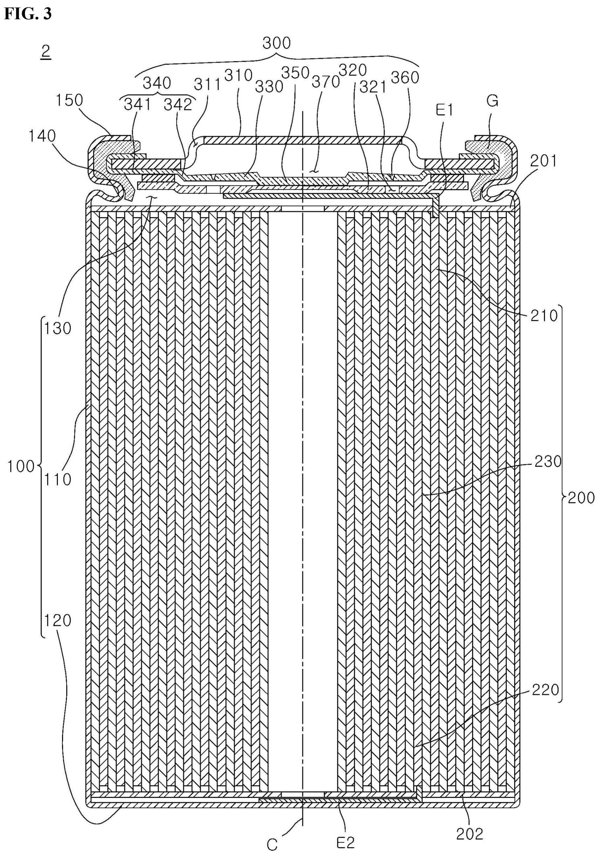

FIG. 2 is a perspective view of a rechargeable battery according to a first embodiment of the present disclosure, and FIG. 3 is a cross-sectional view of the rechargeable battery according to the first embodiment of the present disclosure.

Referring to FIGS. 2 and 3, a rechargeable battery 2 according to the present embodiment may include a case 100, an electrode assembly 200, and a cap assembly 300.

An example in which the rechargeable battery 2 is a cylindrically shaped lithium ion rechargeable battery will be described below. However, the present disclosure is not limited thereto. In other examples according to the present disclosure, the rechargeable battery may be, for example, a lithium polymer battery or a prismatic battery.

The case 100 may form an exterior of the rechargeable battery 2. The case 100 may be provided to be electrically conductive. The case 100 may formed from one or more materials such as among steel, stainless steel, aluminum, and an aluminum alloy. The case 100 may protect the electrode assembly 200 from external impact and may perform a heat dissipation function of releasing the heat resulting from a charge-discharge operation of the electrode assembly 200 to outside of the case 100.

The case 100 may include a sidewall portion 110 formed in a cylindrical shape and having a central axis C formed at a central portion. The central axis C of the case 100 indicates the central axis of the sidewall portion 110. Both ends of the sidewall portion 110 that are perpendicular to the central axis C of the case 100 may be open.

The case 100 may further include a bottom portion 120 closing a lower end of the sidewall portion 110. The bottom portion 120 may be a substantially disc-like shape and may be disposed to face the lower end of the sidewall portion 110. The bottom portion 120 may be disposed to be perpendicular to the central axis C of the case 100. A peripheral surface of the bottom portion 120 may be coupled to the lower end of the sidewall portion 110. The bottom portion 120 may be integrally formed with the sidewall portion 110 by a drawing process or the like. Or, in other embodiments, the bottom portion 120 may be formed separate from the sidewall portion 110 and then coupled to the sidewall portion 110 by welding or the like.

The case 100 may further include an open portion 130 at an upper end of the sidewall portion 110. The open portion 130 may allow for the electrode assembly 200to be inserted into the case 100 and provide a space in which the cap assembly 300is installed in an upper end region of the case 100. The open portion 130 may indicate an empty space surrounded by an upper end region of the sidewall portion 110 that is provided opposite to the bottom portion 120.

The electrode assembly 200 may serve as a unit structure that performs power charging and discharging operations in the rechargeable battery 2. The electrode assembly 200 may include a first electrode plate 210, a second electrode plate 220, and a separator 230 disposed between the first electrode plate 210 and the second electrode plate 220. The electrode assembly 200 may be disposed inside the case 100. The electrode assembly 200 may be inserted into the case 100 through the open portion 130 of the case 100.

The electrode assembly 200 may have a form that is wound about a winding axis. More specifically, the electrode assembly 200 may be formed by stacking the first electrode plate 210, the separator 230, and the second electrode plate 220 and then winding the stack clockwise or counterclockwise about a winding axis. Accordingly, the electrode assembly 200 may have a substantially jelly-roll-like form. The cross-sectional shape of the electrode assembly 200 is not limited to a circular shape and may be various other shapes such as an elliptical shape and a polygonal shape. The winding axis may along a straight line that passes through a central portion of the electrode assembly 200. The winding axis of the electrode assembly 200 may be coaxial with the central axis C of the case 100.

The first electrode plate 210 may function as a positive electrode of the electrode assembly 200. The first electrode plate 210 may be formed from a foil structure that includes a metal material such as aluminum or an aluminum alloy. The type, size, shape, and the like of the first electrode plate 210 are not limited as long as the first electrode plate 210 does not cause an undesirable chemical change in the rechargeable battery and has conductivity.

A first active material layer may be provided on at least a portion of the first electrode plate 210. More specifically, the first active material layer may be provided on both surfaces of the first electrode plate 210 or may be provided on only one surface of the first electrode plate 210.

As the first electrode plate 210 functions as a positive electrode, the first active material layer may include a positive electrode active material. The positive electrode active material may be a compound capable of reversible intercalation and deintercalation of lithium (a lithiated intercalation compound). Some examples of the positive electrode active material may be one or more composite oxides of lithium and a metal selected from cobalt, manganese, nickel, iron, and combinations. In specific examples, the positive electrode active material may include at least any one of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM, where 0<x<1, 0<y<1, 0<z<1, and x+y+z=1). The positive electrode active material may include one of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM) or may include any two or all of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM).

The first active material layer may further include a positive electrode conductive additive. The positive electrode conductive additive is used to impart conductivity to the first active material layer, and any electrically conductive material that does not cause an undesirable chemical change may be used as the positive electrode conductive additive. Examples of the positive electrode conductive additive include carbon-based materials such as natural graphite, artificial graphite, carbon black, acetylene black, ketjen black, carbon fibers, carbon nanofibers, and carbon nanotubes, metal-based materials in the form of a metal powder or metal fibers and containing copper, nickel, aluminum, silver, and the like, conductive polymers such as polyphenylene derivatives, or a mixture thereof.

The first active material layer may further include a positive electrode binder. The positive electrode binder serves to ensure that particles constituting the positive electrode active material are adhered to each other and the positive electrode active material is adhered to the first electrode plate 210.

As the positive electrode binder, a nonaqueous binder, an aqueous binder, a dry binder, or a combination thereof may be used.

Examples of the nonaqueous binder include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

When the aqueous binder is used as the positive electrode binder, a cellulose-based compound that can impart viscosity may be further included. As the cellulose-based compound, carboxymethyl cellulose, hydroxypropyl methyl cellulose, methyl cellulose, alkali metal salts thereof, or a mixture of one or more thereof may be used. Na, K, or Li may be used as the alkali metal.

The dry binder is a polymer material that can be formed into fibers and may be, for example, polytetrafluoroethylene, polyvinylidene fluoride, a polyvinylidene fluoride-hexafluoropropylene copolymer, polyethylene oxide, or a combination thereof.

The first electrode plate 210 may be electrically connected to the cap assembly 300. As the first electrode plate 210 functions as the positive electrode of the electrode assembly 200, the cap assembly 300 may function as a positive electrode terminal of the rechargeable battery 2. The first electrode plate 210 may be electrically connected to the cap assembly 300 by a first electrode tab E1. The first electrode tab E1 may include a conductive metal material such as copper, a copper alloy, nickel, or a nickel alloy. The first electrode tab E1 may be disposed on an upper side of the electrode assembly 200 and may have its ends connected to the first electrode plate 210 and the cap assembly 300. One end of the first electrode tab E1 may be directly connected to the first electrode plate 210 or may be indirectly connected to the first electrode plate 210 via a separate current collector connected to the first electrode plate 210. However, the first electrode plate 210 is not limited to such a configuration and may be directly connected to the cap assembly 300 without the first electrode tab E1.

The second electrode plate 220 may function as a negative electrode of the electrode assembly 200. The second electrode plate 220 may be formed from a foil that includes a metal material such as copper, a copper alloy, nickel, or a nickel alloy. The second electrode plate 220 may be spaced a predetermined distance from the first electrode plate 210 and face the first electrode plate 210.

The type, size, shape, and the like of the second electrode plate 220 are not limited as long as the second electrode plate 220 does not cause undesirable chemical changes in a rechargeable battery and has conductivity.

A second active material layer may be provided on at least a portion of the second electrode plate 220. The second active material layer may be provided on both surfaces of the second electrode plate 220 or may be provided on only one surface of the second electrode plate 220.

As the second electrode plate 220 functions as a negative electrode, the second active material layer may include a negative electrode active material. The negative electrode active material may include a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions may be a carbon-based negative electrode active material, and may include, for example, crystalline carbon, amorphous carbon, or a combination thereof. Examples of the crystalline carbon include graphite such as natural graphite or artificial graphite that is irregularly shaped, plate-shaped, flake-shaped, spherical, or fibrous, and examples of the amorphous carbon include soft carbon, hard carbon, mesophase pitch carbide, and calcinated coke.

An alloy of the lithium metal may include lithium metal and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may be silicon, a silicon-carbon composite, SiOₓ (x=1 or 2), a Si-Q alloy or a combination thereof. In the formula Si-Q, Q is selected from alkali metals, alkali earth metals, Group 13 elements, Group 14 elements (excluding Si), Group 15 elements, Group 16 elements, transition metals, rare earth elements, and combinations thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surfaces of the silicon particles. For example, the silicon-carbon composite particles may include secondary particles (core) in which silicon primary particles are assembled and an amorphous carbon coating layer (shell) located on the surfaces of the secondary particles. The amorphous carbon may also be located between the silicon primary particles. For example, the silicon primary particles may be coated with amorphous carbon. The secondary particles may be dispersed in an amorphous carbon matrix.

The silicon-carbon composite may further include crystalline carbon. For example, the silicon-carbon composite may include cores including crystalline carbon and silicon particles and an amorphous carbon coating layer located on the surfaces of the cores.

The Si-based negative electrode active material or Sn-based negative electrode active material may be mixed with a carbon-based negative electrode active material.

The second active material layer may further include a negative electrode conductive additive and a negative electrode binder.

The negative electrode conductive additive is used to impart conductivity to the second active material layer, and any electrically conductive material that does not cause an undesirable chemical change may be used as the negative electrode conductive additive. Examples of the negative electrode conductive additive include carbon-based materials such as natural graphite, artificial graphite, carbon black, acetylene black, ketjen black, carbon fibers, carbon nanofibers, and carbon nanotubes, metal-based materials in the form of a metal powder or metal fibers and containing copper, nickel, aluminum, silver, and the like, conductive polymers such as polyphenylene derivatives, or a mixture thereof.

The negative electrode binder serves to ensure that particles constituting the negative electrode active material are adhered to each other and the negative electrode active material is adhered to the second electrode plate 220.

As the negative electrode binder, a nonaqueous binder, an aqueous binder, a dry binder, or a combination thereof may be used.

Examples of the nonaqueous binder include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

When the aqueous binder is used as the negative electrode binder, a cellulose-based compound that can impart viscosity may be further included. As the cellulose-based compound, carboxymethyl cellulose, hydroxypropyl methyl cellulose, methyl cellulose, alkali metal salts thereof, or a mixture of one or more thereof may be used. Na, K, or Li may be used as the alkali metal.

The dry binder is a polymer material that can be formed into fibers. The dry binder may be, for example, polytetrafluoroethylene, polyvinylidene fluoride, a polyvinylidene fluoride-hexafluoropropylene copolymer, polyethylene oxide, or a combination thereof.

The second electrode plate 220 may be electrically connected to the case 100. For example, the second electrode plate 220 may be electrically connected to the case 100 by a second electrode tab E2. As the second electrode plate 220 may function as the negative electrode of the electrode assembly 200, the case 100 may function as a negative electrode terminal of the rechargeable battery 2. The second electrode tab E2 may include a conductive metal material such as copper, a copper alloy, nickel, or a nickel alloy. The second electrode tab E2 may be disposed on a lower side of the electrode assembly 200 and may have its ends connected to the second electrode plate 220 and the bottom portion 120 of the case 100. One end of the second electrode tab E2 may be directly connected to the second electrode plate 220 or may be indirectly connected to the second electrode plate 220 via a separate current collector that is connected to the second electrode plate 220. However, the second electrode plate 220 is not limited to this configuration and may be directly connected to the case 100 without the second electrode tab E2.

The separator 230 may be disposed between the first electrode plate 210 and the second electrode plate 220. The separator 230 may prevent a short circuit of the first electrode plate 210 and the second electrode plate 220 while allowing movement of lithium ions between the first electrode plate 210 and the second electrode plate 220. Polyethylene, polypropylene, polyvinylidene fluoride, or a multi-layer film of two or more thereof may be used as the separator 230. Or, in other embodiments, a mixed multi-layer film such as a polyethylene/polypropylene double-layer separator, a polyethylene/polypropylene/polyethylene triple-layer separator, and a polypropylene/polyethylene/polypropylene triple-layer separator may also be used as the separator 230.

The separator 230 may include a porous base and a coating layer located on one surface or both surfaces of the porous base and including an organic material, an inorganic material, or a combination thereof.

The porous base may be a polymer membrane formed of any one polymer selected from a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, TEFLON^{®}, and polytetrafluoroethylene, or a copolymer or mixture of two or more thereof.

The organic material may include a polyvinylidene fluoride-based polymer or a (meth)acryl-based polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and inorganic material may be formed in a single coating layer. In other examples, a coating layer including the organic material and a coating layer including the inorganic material may be stacked.

The separator 230 may be provided as a pair of separators 230. The pair of separators 230 may be disposed to face surfaces of the first electrode plate 210 or the second electrode plate 220. The pair of separators 230 may be wound about the winding axis together with the first electrode plate 210 and the second electrode plate 220.

A first insulation plate 201 and a second insulation plate 202 may be disposed on both sides of the electrode assembly 200. The first insulation plate 201 and the second insulation plate 202 may include an insulation material such as rubber, polyethylene (PE), polypropylene (PP), and polyethylene terephthalate (PET).

The first insulation plate 201 according to the present embodiment may be a substantially disc-like structure. The first insulation plate 201 may be disposed between an upper surface of the electrode assembly 200 and the cap assembly 300. Accordingly, the first insulation plate 201 may prevent the upper surface of the electrode assembly 200 from contacting the cap assembly 300 and may insulate the electrode assembly 200 and the cap assembly 300 from each other. A through-hole through which the first electrode tab E1 extends may be formed in the first insulation plate 201.

The second insulation plate 202 may be a substantially disc-like structure. The second insulation plate 202 may be disposed between a lower surface of the electrode assembly 200 and the bottom portion 120 of the case 100. Accordingly, the second insulation plate 202 may prevent the lower surface of the electrode assembly 200 from contacting the bottom portion 120 of the case 100 and may insulate the electrode assembly 200 and the bottom portion 120 of the case 100 from each other. A through-hole (not illustrated) through which the second electrode tab E2 extends may be formed in the second insulation plate 202.

The cap assembly 300 may be coupled to the case 100 and may seal the open portion 130 of the case 100. For example, the cap assembly 300 may be disposed on the upper end of the sidewall portion 110. A beading part 140 that is concave toward the central axis C of the case 100 may be formed on the sidewall portion 110. The beading part 140 may be disposed on a lower side of the cap assembly 300 and may limit the extent to which the cap assembly 300 is inserted into the case 100. A crimping part 150 where the upper end of the sidewall portion 110 is bent toward the central axis C of the case 100 may be formed in an upper side of the beading part 140. The crimping part 150 may prevent the cap assembly 300 from being detached to outside of the case 100.

The cap assembly 300 may include an upper cap 310, a lower cap 320, a vent plate 330, an extension 340, and a contact portion 350.

The upper cap 310 forms an upper outer appearance of the cap assembly 300 and may be placed in the opening 130. A cap up hole 311 may be formed in the upper cap 310 to discharge gases generated inside the case 100 to the outside of the case 100. The upper cap 310 may be electrically connected to the first electrode plate 210 by the lower cap 320 and the vent plate 330.

The lower cap 320 may face the upper cap 310 and may be electrically connected to the electrode assembly 200. A lower cap hole 321 may be formed in the lower cap 320 that extends through the lower cap 320.

The vent plate 330 may be arranged between the upper cap 310 and the lower cap 320.

The extension 340 may be extended from the vent plate 330 and be connected to the upper cap 310. The extension 340 may support the vent plate 330 with respect to the upper cap 310 and provide an electrical connection between the upper cap 310 and the vent plate 330.

The extension 340 according to the present embodiment may include a support 341 and a hinge 342. The support 341 forms part of an outer surface of the extension 340 and may be connected to the upper cap 310. The hinge 342 forms another part of the outer surface of the extension 340 and may be arranged between the support 341 and the vent plate 330. The hinge portion 342 may interconnect the support portion 341 and the vent plate 330 and guides deformation of the vent plate 330 when the internal pressure of the case 100 increases.

The contact portion 350 may protrude from the vent plate 330 toward the lower cap 320 and contact the lower cap 320.

The rechargeable battery 2 according to the present embodiment may further include a notch 360and a recess 370. The recess 370 may be formed concavely from the vent plate 330 toward the contact portion 350. The recess 370 reduces the thickness of the central region of the vent plate 330, thereby inducing smooth deformation of the vent plate 330 when the internal pressure of the case 100 increases.

A gasket G may be disposed between the case 100 and the cap assembly 300. The gasket G fix the position of the cap assembly 300 in the open portion 130 by its elastic restoration force, electrically insulates the case 100 and the cap assembly 300 from each other, and block inflow or outflow of moisture or an electrolyte between the case 100 and the cap assembly 300. The gasket G may include an insulation material such as rubber, polyethylene (PE), polypropylene (PP), and polyethylene terephthalate (PET). The gasket G may be formed in a substantially ring-like shape and may be disposed on an inner side of the beading part 140 and/or the crimping part 150. An outer side surface of the gasket G may contact an inner side surface of the beading part 140 and/or the crimping part 150. An inner side surface of the gasket G may contact an outer side surface of the cap assembly 300.

The gasket G may be disposed on the inner side of the beading part 140 and/or the crimping part 150. The gasket G may be electrically connected to the first electrode plate 210 by the first electrode tab E1. As the first electrode plate 210 functions as the positive electrode of the electrode assembly 200, the cap assembly 300 may function as the positive electrode terminal of the rechargeable battery.

When a pressure inside the case 100 increases due to overcurrent or the like, the cap assembly 300 may block electrical connection between the rechargeable battery 2 and an external device. When the pressure inside the case 100 increases, the cap assembly 300 may break and allow8 for the space inside the case 100 to be open to the space outside of the case 100. Accordingly, the cap assembly 300 may reduce a risk of explosion of the rechargeable battery 2 when overcurrent occurs.

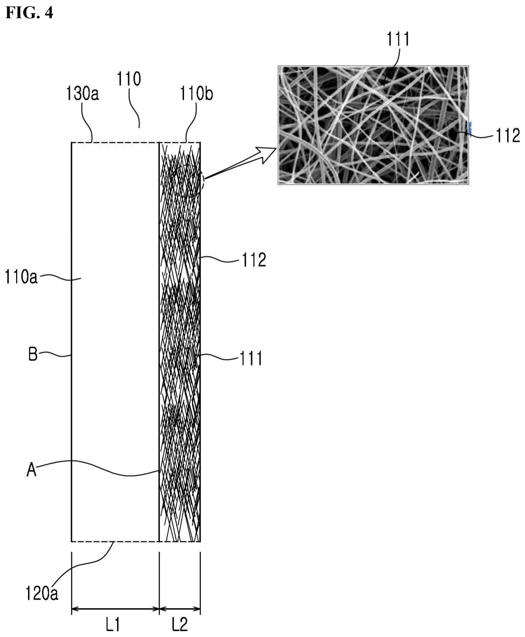

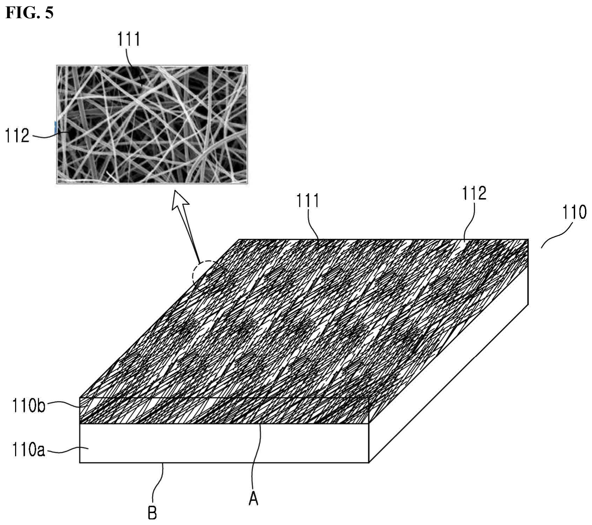

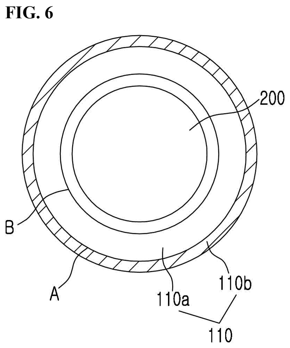

FIGS. 4 to 6 show a configuration of the case of a rechargeable battery according to an embodiment of the present disclosure. FIG. 4 is a cross-sectional in a thickness direction of the sidewall portion of the case of the rechargeable battery. FIG. 5 is a top view of the sidewall portion of the case of the rechargeable battery. FIG. 6 is a cross-sectional view of the case of the rechargeable battery.

Referring to FIGS. 4 to 6, the sidewall portion 110 of the case includes a base layer 110a. The base layer 110a may constitute part of the sidewall portion 110 of the case and may support another part of the sidewall portion 110 of the case. The base layer 110a may include at least one or more metals among steel, stainless steel, aluminum, and an aluminum alloy. However, the present disclosure is not limited to these examples.

The base layer 110a may have a thickness L1 of 50 µm or more, specifically, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250 µm, of 50 to 250 µm. Within this range, to the base layer 110a may withstand expansion of the battery during charge-discharge of the battery.

The base layer 110a has an outer peripheral surface A and an inner peripheral surface B opposite the outer peripheral surface A. The inner peripheral surface B of the base layer 110a may face the electrode assembly 200, and the outer peripheral surface A of the base layer 110a may face away from the electrode assembly 200.

Referring to FIG. 4, cellulose-based nanofibers 111 and a polyolefin-based resin 112 may be provided on the outer peripheral surface A of the base layer 110a. The cellulose-based nanofibers 111 may increase strength of the sidewall portion 110 of the case, thereby increasing stability in the event of an external collision. The cellulose-based nanofibers 111 may also suppress ignition inside the battery.

In an embodiment, the cellulose-based nanofibers 111 may be crystalline cellulose-based nanofibers. The crystalline cellulose-based nanofibers have higher strength than non-crystalline cellulose-based nanofibers and further increase the strength of the case, thereby increasing stability against external collision and suppressing ignition inside the battery. The crystalline cellulose-based nanofibers may be fabricated using a method known to those skilled in the art.

The cellulose-based nanofibers may include hydroxyl groups. The hydroxyl groups of the cellulose-based nanofibers may, when forming a nanofiber web increase strength of the nanofiber web. Thus, the hydroxyl group may increase stability against external collisions and suppress ignition inside the battery.

In an embodiment, the cellulose-based nanofibers may include a repeating unit of Chemical Formula 1: 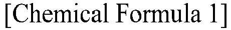 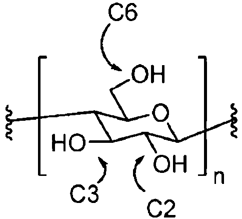 In this case, the cellulose-based nanofibers are cellulose nanofibers.

In another embodiment, the cellulose-based nanofibers may be nanofibers including one or more of a cellulose ether-based resin and a cellulose ester-based resin in which, in the unit of Chemical Formula 1 above, any one of hydroxyl groups at C2, C3, and C6 positions is substituted with an ether group or an ester group. The cellulose ether-based resin and the cellulose ester-based resin may also have a hydroxyl group.

In particular, the nanofibers may be made of cellulose esters, such as cellulose acetate. A degree of substitution may be about 2.0 to 2.5.

Furthermore, the nanofibers may be made of cellulose ethers, such as ethyl cellulose, hydroxypropyl cellulose, hydroxyethyl cellulose, methyl cellulose, and carboxymethyl cellulose. The solubility of cellulose ethers is highly dependable on the degree of substitution. Alkylcelluloses in general have one or more hydroxyl groups substituted by alkyl groups, mainly methyl and ethyl. The hydrophobicity of alkyl cellulose increases with the length of the alkyl chain and degree of substitution.

The cellulose-based nanofibers have an average length that is significantly longer than their average diameter. In embodiments, the cellulose-based nanofibers may have an average diameter of 50 nm or less, for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50 nm, from 1 to 50 nm. The cellulose-based nanofibers may have an average length that exceeds 1 µm, for example, an average length that ranges from 1 µm to 1,000 µm, or an average length that ranges from 10 µm to 1,000 µm.

Here, "average diameter" is an average value of measured diameters of the cellulose-based nanofibers and may refer to a general diameter when the cellulose-based nanofibers have a circular cross-section and may refer to the longest length of a cross-section of the cellulose-based nanofibers when the cross-section is not circular. "Average length" may be an average value of measured lengths of the cellulose-based nanofibers.

Some hydroxyl groups of the cellulose-based nanofibers may be modified to be hydrophobic. The cellulose-based nanofibers of which some hydroxyl groups are modified to be hydrophobic may contribute to addressing a problem (described below) of rust in the case caused by hydroxyl groups of the cellulose-based nanofibers. In addition, the cellulose-based nanofibers of which some hydroxyl groups are modified to be hydrophobic may also improve electrolyte impregnability.

The cellulose-based nanofibers modified to be hydrophobic may be formed by modifying cellulose-based nanofibers using a silane compound. For example, cellulose-based nanofibers and a silane compound may be mixed and then heat-treated.

The silane compound may include one or more of a silane coupling agent containing an epoxy group, a silane coupling agent containing an amino group, a silane coupling agent containing a vinyl group, a silane coupling agent containing a mercapto group, and a silane coupling agent containing an alkyl group. The silane coupling agent containing an epoxy group may include one or more of epoxycyclohexyl propyl trimethoxysilane and epoxycyclohexyl propyl-triethoxysilane, but the present disclosure is not limited thereto. The silane coupling agent containing an amino group may include one or more of aminopropyl trimethoxysilane and aminopropyl triethoxysilane, but the present disclosure is not limited thereto. The silane coupling agent containing a vinyl group may include one or more of vinyl trimethoxysilane and vinyl triethoxysilane, but the present disclosure is not limited thereto. The silane coupling agent containing a mercapto group may include one or more of mercaptopropyl trimethoxysilane and mercaptopropyl triethoxysilane, but the present disclosure is not limited thereto. The silane coupling agent containing an alkyl group may include one or more of methyl trimethoxysilane, ethyl trimethoxysilane, methylethyl dimethoxysilane, and methylethyl diethoxysilane, but the present disclosure is not limited thereto.

These silane coupling agents may be maintained for a long period of time in cellulose-based nanofibers even after repeated charge-discharge of a battery with an electrolyte.

The cellulose-based nanofibers may be in the form of a nanofiber web made of cellulose nanofibers located on the outer peripheral surface of the base layer. The nanofiber web may enhance bonding between the nanofibers, thereby further increasing the strength of the case.

The nanofiber web may be formed using methods known to those skilled in the art. In an embodiment, the nanofiber web may be made by electrospinning an electrospinning solution including one or more of a cellulose-based resin, a cellulose ether-based resin, and a cellulose ester-based resin.

Electrospinning may be performed by preparing an electrospinning solution including a predetermined solvent and one or more of a cellulose-based resin, a cellulose ether-based resin, and a cellulose ester-based resin. The spinning of the electrospinning solution may be under an electric field through a nozzle of an electrospinning device.

The cellulose-based nanofibers may increase the strength of the nanofiber web by having the hydroxyl groups. But the cellulose-based nanofibers may also cause damage to the case by drawing moisture or oxygen. Specifically, when the base layer of the case is made of the metals described above, rust may occur due to external moisture or oxygen. To prevent such a problem, a polyolefin-based resin may be provided on the outer peripheral surface of the base layer together with the cellulose-based nanofibers. The polyolefin-based resin may prevent damage to the case due to the hydroxyl groups of the cellulose-based nanofibers. In addition, a combination of the cellulose-based nanofibers and the polyolefin-based resin may provide a barrier effect to moisture and oxygen, thereby increasing a sealing effect.

The polyolefin-based resin may include one or more of a polyethylene-based resin such as low-density polyethylene and high-density polyethylene and a polypropylene-based resin. at The polyethylene-based resin may be least one of selected from the group consisting of polyethylene, polypropylene and copolymers thereof. For example, the polyolefin-based resin may be a polypropylene-based resin. The polypropylene-based resin may prevent damage to the case and provide an excellent barrier effect.

A mixture of the cellulose-based nanofibers and the polyolefin-based resin may be provided on the outer peripheral surface of the base layer. In an embodiment, the cellulose-based nanofibers may be included at 70 to 90 wt% of the mixture for example 70,71,72,73,74,75,76,77,78,79,80,81,82,83,84,85,86,87,88,89,90 wt%, and the polyolefin-based resin may be included at 10 to 30 wt% of the mixture, for example 10,11,12,13,14,15,16,17,18,19,20,21,22,23,24,25,26,27,28,29,30 wt%. Within such ranges, the cellulose-based nanofibers can sufficiently form a nanofiber web and improve the strength of the case. Also, the polyolefin-based resin can prevent rust in the case that would otherwise be caused by the hydroxyl groups of the cellulose-based nanofibers.

In an example embodiment, the cellulose-based nanofibers are impregnated or embedded in the polyolefin-based resin. A nanofiber web of the cellulose-based nanofibers is provided on the outer peripheral surface of the base layer. In this case, the nanofiber web may be stably positioned on the outer peripheral surface of the base layer, and the nanofiber web is not easily separated from the case even during charge-discharge of a battery. Thus, the service life and stability of the battery are ensured.

Referring again to FIG. 4, the sidewall portion 110 of the case includes an outer layer 110b located on the outer peripheral surface A of the base layer 110a. The outer layer 110b may surround the outer peripheral surface A of the base layer 110a and may extend from the open portion 130 of the case to the bottom portion 120 of the case. The outer layer may include the polyolefin-based resin 112 and the web of the cellulose-based nanofibers 111 impregnated or embedded in the polyolefin-based resin 112. The web of the cellulose-based nanofibers 111 may extend from a portion 130a of the sidewall portion 110 that is in contact with the open portion of the case to a portion 120a of the sidewall portion 110 that is in contact with the bottom portion of the case.

In an embodiment, the web of the cellulose-based nanofibers may have a porosity. Here, "porosity" indicates a state in which the cellulose-based nanofibers are coated with the polyolefin-based resin, there are open spaces between the cellulose-based nanofibers. The porosity may increase stability of a battery by decreasing pressure applied to the web during repeated charge and discharge of the battery. In addition, the porosity may increase electrolyte impregnability.

In an embodiment, the outer layer may have a region formed only of the polyolefin-based resin without the cellulose-based nanofibers. Here, the "region formed only of the polyolefin-based resin" may be a region that is present in the outer layer and includes only the polyolefin-based resin without the cellulose-based nanofibers. The region may further increase stability of a battery by decreasing pressure applied to the web during repeated charge and discharge of the battery.

A thickness L2 of the outer layer 110b may be less than the thickness L1 of the base layer 110a. As such, structural stability of a battery may be increased by increasing the strength of the battery. The thickness L2 of the outer layer 110b may be 10% to 30%, for example, 10,11,12,13,14,15,16,17,18,19,20,21,22,23,24,25,26,27,28,29,30%, 10% to 20%, of the thickness L1 of the base layer 110a. Within such ranges, it may be easy to implement the above-described effects of the outer layer. In examples, the thickness L2 of the outer layer 110b may be 50 µm or less, for example, the thickness L2 may exceed 0 µm and be 50 µm or less or may be from 1 to 50 µm, and the thickness L1 of the base layer 110a may be 50 µm or more, for example, from 50 to 250 µm.

FIGS. 4 to 6 show a configuration in which the cellulose-based nanofibers and the polyolefin-based resin are located (directly) on the outer peripheral surface of the sidewall portion of the case. However, the present disclosure is not limited thereto. The cellulose-based nanofibers and the polyolefin-based resin may be located (directly) on an outer peripheral surface of the bottom portion of the case. The cellulose-based nanofibers and the polyolefin-based resin may be as in the above descriptions. In a specific example, an electrolyte may be included between the electrode assembly 200 and the sidewall portion 110 of the case, and the cellulose-based nanofibers and the polyolefin-based resin may be located (directly) on an inner peripheral surface of the sidewall portion of the case.

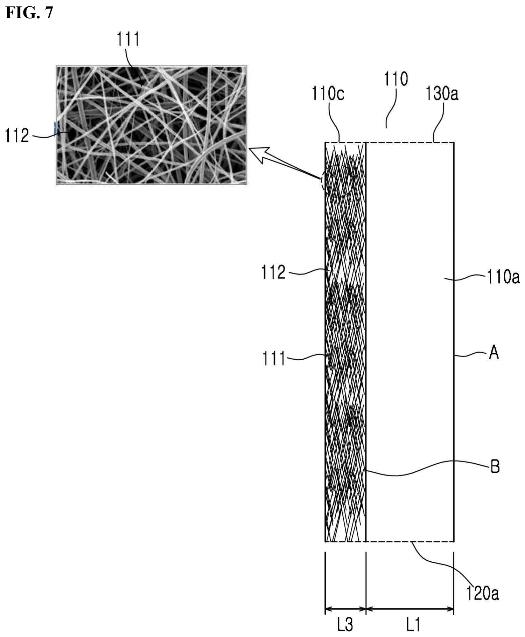

FIG. 7 is a cross-sectional view of a case of the rechargeable battery according to another embodiment of the present disclosure.

Referring to FIG. 7, cellulose-based nanofibers 111 and a polyolefin-based resin 112 are provided on the inner peripheral surface B of the base layer 110a. Here, the sidewall portion 110 of the case includes an inner layer 110c located on the inner peripheral surface B of the base layer 110a. The configurations of the cellulose-based nanofibers and the polyolefin-based resin may be the same as those described above, and the configuration of the inner layer 110c may be the same as the outer layer 110b described above with reference to FIGS. 4 to 6.

The cellulose-based nanofibers may be modified to be hydrophobic. Specifically, as described above, the cellulose-based nanofibers may be modified with one or more of a silane coupling agent containing an epoxy group, a silane coupling agent containing a vinyl group, a silane coupling agent containing a mercapto group, a silane coupling agent containing an amino group, and a silane coupling agent containing an alkyl group, thereby further increasing electrolyte impregnability.

A web made of the cellulose-based nanofibers may have porosity. The porosity may increase electrolyte impregnability.

A thickness L3 of the inner layer 110c may be less than the thickness L1 of the base layer 110a. With such a configuration, structural stability of a battery may be increased by increasing the strength of the battery.

The thickness L3 of the inner layer 110c may be 10 to 30%, for example, 10,11,12,13,14,15,16,17,18,19,20,21,22,23,24,25,26,27,28,29,30%, 10 to 20%, of the thickness L1 of the base layer 110a. Within such ranges, it is easy to implement the above-described effects of the inner layer.

In some examples, the thickness L3 of the inner layer 110c may be 50 µm or less, for example, , 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50 µm, the thickness L3 may exceed 0 µm and be 50 µm or less or may be from 1 to 50 µm. The thickness L1 of the base layer 110a may be 50 µm or more, for example, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250 µm, from 50 to 250 µm.

FIG. 7 shows an example in which the cellulose-based nanofibers and the polyolefin-based resin are located on the outer peripheral surface of the sidewall portion of the case. However, the present disclosure is not limited thereto, and the cellulose-based nanofibers and the polyolefin-based resin may be located on an inner peripheral surface of the bottom portion of the case. In other embodiments, the cellulose-based nanofibers and the polyolefin-based resin may be located on both the inner peripheral surface of the sidewall portion of the case and the outer peripheral surface of the sidewall portion of the case.

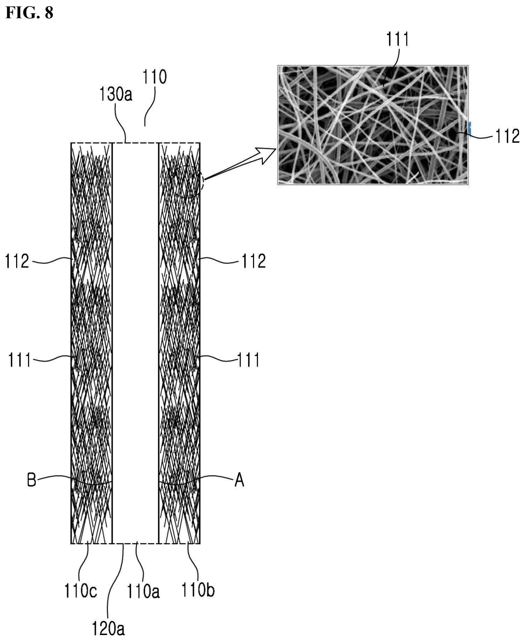

FIG. 8 is a cross-sectional view of a case of the rechargeable battery according to yet another embodiment of the present disclosure.

Referring to FIG. 8, the sidewall portion 110 of the case includes an inner layer 110c located on the inner peripheral surface B of the base layer 110a and an outer layer 110b located on the outer peripheral surface A of the base layer 110a. The configuration of the outer layer 110b is substantially the same as the configuration of the outer layer 110b described above with reference to FIGS. 4 to 6. The configuration of the inner layer 110c is substantially the same as the configuration thereof described above with reference to FIG. 7.

FIG. 8 shows an embodiment in which the cellulose-based nanofibers and the polyolefin-based resin are located on the outer peripheral surface and the inner peripheral surface of the sidewall portion of the case. However, the present disclosure is not limited thereto, and the cellulose-based nanofibers and the polyolefin-based resin may be located, for example, on an inner peripheral surface and an outer peripheral surface of the bottom portion of the case.

A ceramic-containing coating layer may be further formed between the base layer and the inner layer in the sidewall portion. The ceramic-containing coating layer may prevent deformation of the inner layer and increase sealability of the case.

The ceramic-containing coating layer may only include a ceramic. The ceramic may include a metal oxide, a metalloid oxide, a metal fluoride, a metal hydroxide, or a combination thereof. For example, an inorganic filler may include Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof. But the present disclosure is not limited to these examples.

The ceramic-containing coating layer may include a ceramic and a binder. The binder may increase a bonding force of the ceramic-containing coating layer to the inner layer and the inner peripheral surface of the base layer.

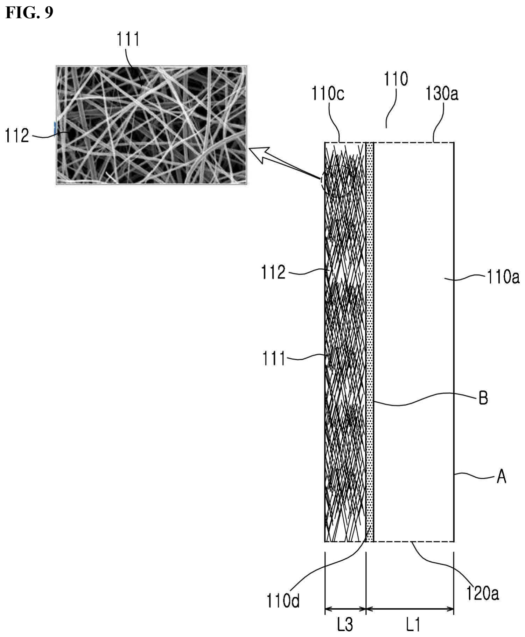

FIG. 9 is a cross-sectional view of a case of the rechargeable battery according to still another embodiment of the present disclosure.

Referring to FIG. 9, the sidewall portion 110 of the case includes a ceramic-containing coating layer 110d and an inner layer 110c that are provided on the inner peripheral surface B of the base layer 110a. The inner layer 110c includes cellulose-based nanofibers and a polyolefin-based resin that are substantially the same as those described above with reference to FIGS. 4 to 6.

The ceramic-containing coating layer 110d may include only the ceramic described above or may include the ceramic and a binder.

According to the present disclosure, a rechargeable battery includes a case including cellulose-based nanofibers and a polyolefin-based resin. As such, stability of the battery with respect to external collisions is high, ignition inside the battery can be suppressed, a moisture and oxygen blocking effect is excellent, expansion of the battery can be suppressed, and electrolyte impregnability is excellent.

## Claims

1. A rechargeable battery (2) comprising:
a case (100) having a sidewall portion (110) including a base layer (110a); and
an electrode assembly (200) accommodated in the case (100),
wherein the sidewall portion (110) includes a nanofiber web including cellulose-based nanofibers (111) and a polyolefin-based resin (112) that are provided on one or both of an outer peripheral surface (A) of the base layer (110a) and an inner peripheral surface (B) of the base layer (110a).

2. The rechargeable battery (2) of claim 1, wherein the polyolefin-based resin (112) is at least one of selected from the group consisting of polyethylene, polypropylene and copolymers thereof.

3. The rechargeable battery (2) of claim 1 or 2, wherein the nanofiber web is embedded in the polyolefin-based resin (112).

4. The rechargeable battery (2) of any one of the preceding claims, wherein the cellulose-based nanofibers (111) are crystalline cellulose-based nanofibers (111).

5. The rechargeable battery (2) of any one of the preceding claims, wherein the cellulose-based nanofibers (111) include hydroxyl groups.

6. The rechargeable battery (2) of claim 5, wherein the cellulose-based nanofibers include a cellulose-based resin or a derivative of a cellulose-based resin.

7. The rechargeable battery (2) of claim 5, wherein some of the hydroxyl groups of the cellulose-based nanofibers (111) are modified to be hydrophobic.

8. The rechargeable battery (2) of claim 7, wherein the cellulose-based nanofibers (111) modified to be hydrophobic are modified using a silane compound.

9. The rechargeable battery (2) of claim 8, wherein the silane compound includes one or more of a silane coupling agent including an epoxy group, a silane coupling agent including an amino group, a silane coupling agent including a vinyl group, a silane coupling agent including a mercapto group, and a silane coupling agent including an alkyl group.

10. The rechargeable battery (2) of any one of the preceding claims, wherein, the cellulose-based nanofibers (111) and the polyolefin-based resin (112) are in a mixture, and
wherein the cellulose-based nanofibers (111) are 70 to 90 wt% of the mixture, and the polyolefin-based resin (112) are 10 to 30 wt% of the mixture.

11. The rechargeable battery (2) of any one of the preceding claims, wherein the sidewall portion (110) includes an outer layer (110b) provided on the outer peripheral surface of the base layer (110a),
wherein the outer layer (110b) surrounds the outer peripheral surface of the base layer (110a) and extends from an open portion (130a) of the case (100) to a bottom portion (120a) of the case (100),
wherein the outer layer (110b) includes the polyolefin-based resin (112), and the nanofiber web made of the cellulose-based nanofibers (111) being embedded in the polyolefin-based resin (112), and
wherein the nanofiber web extends from the open portion (130a) of the case (100) to the bottom portion (120a) of the case (100); and/or
wherein the sidewall portion (110) includes an inner layer (110c) located on the inner peripheral surface of the base layer (110a),
wherein the inner layer (110c) covers (12) the inner peripheral surface of the base layer (110a) and extends from an open portion (130a) of the case (100) to a bottom portion (120a) of the case (100);
wherein the inner layer (110c) includes the polyolefin-based resin (112) and the nanofiber web made of the cellulose-based nanofibers (111) impregnated in the polyolefin-based resin (112), and
wherein the nanofiber web extends from the open portion (130a) of the case (100) to the bottom portion (120a) of the case (100).

12. The rechargeable battery (2) of claim 11, wherein the inner layer (110c) and/or the outer layer (110b) includes a region that only includes the polyolefin-based resin (112) and not the cellulose-based nanofibers (111).

13. The rechargeable battery (2) of claim 11, wherein a ceramic-containing coating layer (110d) is provided between the base layer (110a) and the inner layer (110c).

14. The rechargeable battery (2) of any one of the preceding claims, wherein the base layer (110a) includes at least one of steel, stainless steel, aluminum, and an aluminum alloy.

15. A battery pack comprising:
a housing (1); and
a plurality of rechargeable batteries disposed inside the housing (1),
wherein the rechargeable batteries each include a case (100) having a sidewall portion (110) including a base layer (110a) and an electrode assembly (200) accommodated in the case (100),
wherein the sidewall portion (110) includes a nanofiber web including cellulose-based nanofibers (111) and a polyolefin-based resin (112) that are provided on one or both of an outer peripheral surface of the base layer (110a) and an inner peripheral surface of the base layer (110a).
